# EUROPEAN PATENT SPECIFICATION

(11) **EP 3 771 587 B1**
(45) Date of publication and mention of the grant of the patent: **07.06.2023**
(21) Application number: 19189574.7
(22) Date of filing: 01.08.2019
(51) Int. Cl.: B60K 17/356, B60K 17/354, B60K 1/00

(54) **ALL-TERRAIN VEHICLE AND CONTROL ARRANGEMENT FOR THE SAME**
GELÄNDEFAHRZEUG UND STEUERUNGSANORDNUNG DAFÜR
VÉHICULE TOUT-TERRAIN ET SYSTÈME DE COMMANDE ASSOCIÉ

(43) Date of publication of application: 03.02.2021
(73) Proprietor: Nokian Raskaat Renkaat Oy, 37100 Nokia (FI)
(72) Inventor: Haapalainen, Mika, 37100 Nokia (FI)
(74) Representative: Kolster Oy Ab

(56) References cited:
- EP-A1- 3 002 147
- EP-A1- 3 483 024
- US-A1- 2004 232 632
- US-A1- 2010 307 846
- US-A1- 2018 086 343
- US-B2- 10 086 838

## Description

### FIELD OF THE INVENTION

The invention relates to an all-terrain vehicle and a control arrangement of an all-terrain motor vehicle. The all-terrain motor vehicle can be particularly a forestry machine, such as a harvester or forwarder, for instance.

### BACKGROUND OF THE INVENTION

All-terrain vehicles, such as forestry machines, are designed suitable to travel on an uneven terrain. The tyres of an all-terrain vehicle exert forces on the terrain, which change considerably during use due to differences in shape and material of the terrain surface. The terrain can for instance comprise large rocks, bumps, obstacles, soft regions or hard regions, which all affect the nature of tyre contact with the terrain and the way in which forces can be transmitted between the tyre and the terrain. Some tyres may be leaning against a steep obstacle, or the vehicle or a part of it may also be in tilted position due to the shape of the terrain. For example due to these reasons, the tyres of the vehicle may be unevenly supported and the amount of forces exerted by the tyres or subsets thereof on the terrain, can variate strongly. An all-terrain vehicle, such as a forestry machine particularly, is often heavy in itself, but it may also be loadable with material, such as logs for instance, whereby the forces exerted by it on the terrain are dependent also on the prevailing amount of material carried by the vehicle. With two-part vehicles having a front part and a loadable rear part, e.g. for the purpose of carrying logs, the distribution of mass between the front part and the rear part can change during use drastically due to changes in amount of logs carried by it. The vehicle may for instance first travel empty to a pick-up area, and return fully loaded. After picking up logs, the mass of its rear part comprising a receptacle for a load has increased considerably compared to what it was when arriving into the pick-up area. The mass of its rear part has thus also increased compared to the front part of the vehicle, the distribution of mass to be moved having thereby changed. Great differences in terrain and mass distribution caused by changes in load situation of the vehicle make it difficult to control traction of the tyres of the vehicle, particularly when both the front part and the back part of the vehicle comprise driven tyres. A drawback of the known all-terrain vehicles, such as forestry machines in particular, has been that they tend to cause environmental damages, e.g. so called rutting, which happens when the tangential speeds of some tyres substantially differ from the ground speed of the tyres. In those situations, the too fast rotating tyres rub and wear the terrain surface. Such problems are caused for example when a driving tyre happens to push with force, which is excessive in view of the prevailing force which the tyre exerts on the terrain, so that traction between the tyre and the terrain surface is lost and the tyre start to rub and wear the ground. Such problems are also caused when a driving tyre rotates too slowly and the other driving tyres push the vechicle such that the too slowly rotating tyre rubs and wears the terrain surface. Such problems are also caused in situations, where the front part has tyres in the air or only lightly touching the terrain. In this type of situations, the tyres of the front part have been likely to slip so that they rub and wear the terrain, and being unable to push the vehicle forward. These challenges are also prone to reduce the transport capacity of the vehicle.

It has now been concluded that these challenges of known two-part all-terrain vehicles are at least partly due to difficulty of rotating tyres of the front part and the rear part with torques and/or speeds which are optimal in the given situation.

Related prior art has been disclosed in documents US2010/307846A1 and EP3002147A1, which show forestry machines.

### BRIEF DESCRIPTION OF THE INVENTION

The object of the invention is to provide a new solution that provides increased accuracy in controllability of traction of an all-terrain vehicle comprising a front driveline and a rear driveline. An object is particularly to alleviate one or more of the above defined drawbacks of prior art and/or problems discussed or implied elsewhere in the description. Embodiments are presented, *inter alia,* by which impact of the all-terrain vehicle on the terrain on which it travels, such as forest terrain, is made more gentle. Embodiments are presented, inter alia, by which transport capacity of the the all-terrain vehicle is increased due to improved traction. Embodiments are presented, *inter alia,* by which it is also possible to achieve one or more of: increased agility of the all-terrain vehicle, lower fuel consumption, reduced jerking, reduced risk of overloading of a driveline component, lower peak torques enabling downscaling components or in major component break down case a limbing mode (limited mobility can be provided.

According to the invention, it is brought forward a new all-terrain motor vehicle, as defined in claim 1, which is a forestry machine, and comprises a front driveline comprising one or more rotatable first tyres and a first input shaft connected with the one or more first tyres for transmitting rotation from a machinery to the one or more rotatable first tyres; and a rear driveline comprising one or more rotatable second tyres and a second input shaft connected with the one or more second tyres for transmitting rotation from a machinery to the one or more rotatable second tyres; and a machinery for rotating the first input shaft and the second input shaft with independently adjustable rotation speeds and torques; and a control system for controlling the machinery. With this solution, one or more of the above mentioned advantages and/or objectives are achieved. Particularly, rotation of the first tyres and second tyres can be separately controlled in an optimized manner for facilitating controlled traction with limited slip in the given situation.

The machinery comprises a first motor for rotating the first input shaft; and a second motor for rotating the second input shaft, the control system being configured to control rotation of the first motor and the second motor. Preferably, the first and second motor are electric motors, or alternatively, the first and second motor are hydraulic motors.

The control system is configured to control rotation of the first motor and rotation of the second motor, and/or transmit signals to a user via a user interface of the motor vehicle, based on magnitude of one or more parameters including a load-dependent parameter of the one or more first tyres and a load-dependent parameter of the one or more second tyres. Hereby rotation of the first tyres of the front driveline can be controlled on the basis of one or more parameters including a parameter indicating the firmness of the grip between the first tyres and the terrain, and rotation of the second tyres of the rear driveline of the all-terrain motor vehicle can be controlled on the basis of one or more parameters including a parameter indicating the firmness of the grip between the second tyres and the terrain. This reduces likelihood of losing traction such that the tyres rub and wear the terrain surface. This also facilitates optimizing distribution of traction between the front driveline and rear driveline.

Said load-dependent parameter of the one or more first tyres is a force directed on an outer surface of said one or more first tyres, and said load-dependent parameter of the one or more second tyres is a force directed on an outer surface of said one or more second tyres. Such forces are directed on tyres by the terrain. A force directed on an outer surface of a tyre is an important factor in traction of a tyre, whereby using magnitude of the force directed on an outer surface of a tyre as a basis for control of rotation of the tyre is effective, sufficiently accurate and reliable control parameter of an all-terrain vehicle when controlled traction with limited slip is desired. In an all-terrain vehicle this is particularly advantageous since hereby the control can be based relatively directly on the nature of tyre contact with the terrain, where the terrain can have complex shape or structure, and where the load situation of a tyre or tyres can vary strongly and constantly. A force directed on an outer surface of a tyre is also variable to be utilized in load determination in alternative ways. It is also possibly usable for determination of other parameters of the tyre and the all-terrain vehicle, such as for giving data about the terrain.

The motor vehicle comprises one or more first sensing devices mounted on one or more of the first tyres for sensing a force directed on an outer surface of the tyre, preferably at least in radial direction of the tyre, which one or more first sensing devices are connected with the control system, preferably with an analyzing unit thereof; and one or more second sensing devices mounted on one or more of the second tyres for sensing a force directed on an outer surface of the tyre, preferably at least in radial direction of the tyre, which one or more second sensing devices are connected with the control system, preferably with an analyzing unit thereof.

Preferable further features/functions are introduced in the following, which further features/functions can be combined with the all-terrain motor vehicle individually or in any combination.

In a preferred embodiment, the motor vehicle is a harvester or a forwarder.

In a preferred embodiment, the control system is configured to control rotation, preferably at least torque, of the first motor and thereby rotation, preferably at least torque, of the first input shaft, based on magnitude of one or more parameters, including a load-dependent parameter of the one or more first tyres, in particular a parameter magnitude of which depends on magnitude of load suspended by the one or more first tyres, and to control rotation, preferably at least torque, of the second motor and thereby rotation, preferably at least torque, of the second input shaft, based on magnitude of one or more parameters, including a load-dependent parameter of the one or more second tyres, in particular a parameter magnitude of which depends on magnitude of load suspended by the one or more second tyres.

In a preferred embodiment, the control system comprises an analyzing unit for analyzing signals received from one or more sensing devices of the all-terrain motor vehicle.

In a preferred embodiment, the motor vehicle comprises one or more first sensing devices for sensing a load-dependent parameter of the one or more first tyres and one or more second sensing devices for sensing a load-dependent parameter of the one or more second tyres.

In a preferred embodiment, the control system, preferably an analyzing unit thereof is configured to determine magnitude of a load-dependent parameter of the one or more first tyres based on (at least) signals received from said one or more first sensing devices of the all-terrain motor vehicle and magnitude of a load-dependent parameter of the one or more second tyres based on (at least) signals received from said one or more second sensing devices of the all-terrain motor vehicle.

In a preferred embodiment, the control system, preferably an analyzing unit thereof, is configured to determine magnitude of force directed on an outer surface of said one or more first tyres based on (at least) signals received from said one or more first sensing devices, and magnitude of force directed on an outer surface of said one or more second tyres based on (at least) signals received from said one or more second sensing devices.

In a preferred embodiment, the motor vehicle comprises a front part comprising said front driveline, and rear part comprising said rear driveline, which front part and rear part are pivotally connected, preferably pivotally at least around three axis orthogonal to each other, e.g. a vertical axis y and two horizontal axis.

In a preferred embodiment, each said sensing device is arranged to measure one or more parameters of the tyre. Said one or more parameters of the tyre preferably include one or more parameters dependent on forces directed on an outer surface of the tyre.In a preferred embodiment, the aforementioned one or more parameters dependent on forces directed on an outer surface of the tyre include one or more dimensions of the tyre, preferably distance between the rim and the outer shell of the tyre in question. This is particularly advantageous since hereby each said sensing device is arranged to measure a parameter changing when the tyre deforms under force exerted thereon.

In a preferred embodiment, the aforementioned one or more parameters dependent on forces directed on an outer surface of the tyre include acceleration of an acceleration sensor mounted on the shell of the tyre in question, in which case each said sensing device preferably comprises an acceleration sensor mounted on the shell of the tyre in question. This is particularly advantageous since hereby each said sensing device is arranged to measure a parameter changing when the tyre deforms under force exerted thereon.

In a preferred embodiment, each said sensing device is arranged to measure pressure inside the tyre in question. Pressure is an advantageous parameter since pressure may affect the result of calculation of the forces directed on an outer surface of the tyre. Preferably, each said sensing device comprises a pressure sensor.

In a preferred embodiment, each said sensing device is arranged to measure temperature. Temperature is an advantageous parameter temperature may affect the result of calculation of the forces directed on the tyre. For this purpose, each said sensing device preferably comprises a temperature sensor.

In a preferred embodiment, the machinery comprises an engine, preferably a combustion engine, serving as a common power source of the first motor and second motor.

In a preferred embodiment, the engine is arranged to rotate one or more hydraulic pumps for generating pressure in hydraulic fluid, the first and second motor being arranged to be rotated by the pressurized hydraulic fluid.

In a preferred embodiment, the engine is arranged to rotate one or more generators for generating electricity, the first and second motor being arranged to be rotated by the electricity generated by the one or more generators.

In a preferred embodiment, the control system is configured to control rotation of the first motor by controlling supply of hydraulic fluid or electricity to the first motor, and to control rotation of the second motor by controlling supply of hydraulic fluid or electricity to the second motor.

In a preferred embodiment, the first input shaft and the second input shaft are connected with different tyres. Preferably, more particularly the first input shaft is connected of said one or more first tyres and one or more second tyres only with the one or more second tyres for transmitting rotation from a machinery to them; and the second input shaft is connected of said one or more first tyres and said one or more second tyres only with the one or more second tyres for transmitting rotation from a machinery to them.

In a preferred embodiment, the first motor is arranged to rotate only the first input shaft of said first and second input shafts; and the second motor is arranged to rotate only the second input shaft of said first and second input shafts.

In a preferred embodiment, the motor vehicle comprises a front part comprising said front driveline, and rear part comprising said rear driveline, the first motor being comprised in the front part and the second motor being comprised in the rear part.

In a preferred embodiment, the engine is comprised in one of the front part and the rear part.

In a preferred embodiment, the all-terrain motor vehicle, such as one of the front part and rear part thereof, comprises a cabin. The cabin can be comprised in the front part, for example.

In a preferred embodiment, one of the front part and rear part comprises an operating interface operable by the user to control the motor vehicle, preferably accessible from a cabin comprised in said one of the of the front part and rear part.

In a preferred embodiment, the all-terrain motor vehicle, such as one of the front part and rear part thereof, comprises a receptacle for receiving logs. The receptacle can be comprised in the rear part, for example.

In a preferred embodiment, the all-terrain motor vehicle, such as one of the front part and rear part thereof, comprises a movable handling head, which may be a harvester head or a grabbing head, for instance.

In a preferred embodiment, the first and second tyres are pneumatic tyres. The solution presented could also be utilized with other type of tyres.

According to the invention, it is also brought forward a new control arrangement of an all-terrain motor vehicle, as defined in claim 8, comprising a control system for controlling a machinery of an all-terrain motor vehicle, preferably comprising an analyzing unit; the control system being configured to control the machinery, in particular rotation of a first motor, preferably at least torque thereof, and rotation of a second motor, preferably at least torque thereof, and/or transmit signals to a user via a user interface of the motor vehicle, based on magnitude of one or more parameters including a load-dependent parameter of the one or more first tyres and a load-dependent parameter of the one or more second tyres. With this solution, one or more of the above mentioned advantages and/or objectives are achieved. Particularly, rotation of the first tyres and second tyres can be separately controlled in an optimized manner for facilitating controlled traction with limited slip in the given situation. Hereby, also rotation of the first tyres of the front driveline can be controlled on the basis of one or more parameters including a parameter indicating the firmness of the grip between the first tyres and the terrain, and rotation of the second tyres of the rear driveline of the all-terrain motor vehicle can be controlled on the basis of one or more parameters including a parameter indicating the firmness of the grip between the second tyres and the terrain. This reduced likelihood of losing traction such that the tyres rub and wear the terrain surface. This also facilitates optimizing distribution of traction between the front driveline and rear driveline.

Said load-dependent parameter of the one or more first tyres is a force directed on an outer surface of said one or more first tyres, and said load-dependent parameter of the one or more second tyres is force directed on an outer surface of said one or more second tyres.

The control arrangement comprises one or more first sensing devices mounted or mountable on one or more of first tyres for sensing a force directed on an outer surface of the tyre, preferably at least in radial direction of the tyre, which one or more first sensing devices are connected or connectable, e.g. by one or more buses for signal transmission, with the control system, preferably with an analyzing unit thereof; and one or more second sensing devices mounted or mountable on one or more of second tyres for sensing a force directed on an outer surface of the tyre, preferably at least in radial direction of the tyre, which one or more second sensing devices are connected or connectable, e.g. by one or more buses for signal transmission, with the control system, preferably with an analyzing unit thereof.

Preferable further features/functions of the control arrangement and the all-terrain motor vehicle have been introduced in the above and in the following, which further features/functions can be combined with the control arrangement and the all-terrain motor vehicle individually or in any combination.

In a preferred embodiment, the control arrangement comprises one or more first sensing devices for sensing a load-dependent parameter of the one or more first tyres and one or more second sensing devices for sensing a load-dependent parameter of the one or more second tyres.

In a preferred embodiment, the control system, preferably an analyzing unit thereof is configured to determine magnitude of a load-dependent parameter of the one or more first tyres based on (at least) signals received from said one or more first sensing devices and magnitude of a load-dependent parameter of the one or more second tyres based on (at least) signals received from said one or more second sensing devices.

In a preferred embodiment, the control system, preferably an analyzing unit thereof, is configured to determine magnitude of force directed on an outer surface of said one or more first tyres based on (at least) signals received from said one or more first sensing devices, and magnitude of force directed on an outer surface of said one or more second tyres based on (at least) signals received from said one or more second sensing devices.

In a preferred embodiment, the control system comprises a receiver, and each said sensing devices comprises a transmitter for transmitting wireless signals to the receiver of the control system.

In a preferred embodiment, said wireless signals include measurement signals. Preferably, the measurement signals indicate a value of a parameter or values of parameters measured by the sensing device in question to the control system.

In a preferred embodiment, said wireless signals include identification signals identifying the tyre from which the wireless signals are transmitted. This is advantageous particularly when the load-dependent parameter is a force directed on an outer surface of said one or more first tyres, because hereby the control system can associate the signal with a specific tyre and base its subsequent actions on knowledge of which tyre is in question. For instance, it can take into account tyre data in its subsequent actions. The tyre data can be stored or uploaded in a memory of the control system, in a cloud, or in a memory chip of a tyre, for instance.

In a preferred embodiment, said wireless signals include tyre data signals containing data indicating one or more of: tyre type, tyre material, tyre condition, date of manufacture, date of installation. This is advantageous since hereby the tyre can inform the control system of its state, which may be relevant for subsequent actions of the control system, such as they may be used in calculations, for instance. Preferably, the sensing device preferably moreover comprises a memory, such as a memory chip, on which the tyre data is stored/storable. This is advantageous since hereby the data moves together with the tyre, which may be relevant e.g. when changing tyres.

In a preferred embodiment, the control system is configured to determine a first threshold for torque of the first motor based on magnitude of one or more parameters including the load-dependent parameter of the one or more first tyres.

In a preferred embodiment, the control system is configured to determine a second threshold for the torque of the second motor based on magnitude of one or more parameters including the load-dependent parameter of the one or more second tyres.

In a preferred embodiment, the control system is configured to increase torque of the second motor when the torque of the first motor reaches the first threshold, and vice versa.

In a preferred embodiment, the control system is configured to transmit a signal to the user of the motor vehicle via a user interface when the torque of the first motor reaches the first threshold, or the torque of the second motor reaches the second threshold or the torque of the first motor reaches the first threshold and the torque of the second motor reaches the second threshold. Said transmitting a signal to a the user can comprise presenting a visual signal in the operating interface, such as lighting a signal light or lighting a visual indicator on a display, or presenting a sound signal, such as an alarm sound, for example.

In a preferred embodiment, the control system is configured to transmit a signal to the user of the motor vehicle via a user interface, which transmitting a signal to a the user then preferably comprises presenting in the operating interface magnitude of the first threshold of the first motor, and magnitude of the second threshold of the second motor. These magnitudes can then be considered to be recommended maximum torques of the first motor and the second motor, for instance.

In a preferred embodiment, the control system is configured to determine a third threshold for speed of the first motor based on magnitude of one or more parameters, including the load-dependent parameter of the one or more first tyres.

In a preferred embodiment, the control system is configured to determine a fourth threshold for the speed of the second motor based on magnitude of one or more parameters, including the load-dependent parameter of the one or more second tyres.

In a preferred embodiment, the control system is configured to transmit a signal to the user of the motor vehicle via a user interface when the speed of the first motor reaches the third threshold, or the speed of the second motor reaches the fourth threshold or the speed of the first motor reaches the third threshold and the speed of the second motor reaches the fourth threshold. Said transmitting a signal to a the user can comprise presenting a visual signal in the operating interface, such as lighting a signal light or lighting a visual indicator on a display, or presenting a sound signal, such as an alarm sound, for instance.

In a preferred embodiment, the control system is configured to transmit a signal to the user of the motor vehicle via a user interface, which transmitting a signal to a the user then preferably comprises presenting in the operating interface magnitude of the third threshold of the first motor, and magnitude of the fourth threshold of the second motor. These magnitudes can then be considered to be recommended maximum speeds of the first motor and the second motor, for instance.

### BRIEF DESCRIPTION OF THE DRAWINGS

In the following, the present invention will be described in more detail by way of example and with reference to the attached drawings, in which
Figure 1 illustrates an embodiment of an all-terrain vehicle.
Figure 2 illustrates preferred details of the all-terrain vehicle of Figure 1 and of a control arrangement thereof.
Figures 3 and 4 illustrate preferred details of the all-terrain vehicle of Figure 1 and of a control arrangement thereof according to a first kind.
Figures 5 and 6 illustrate preferred details of the all-terrain vehicle of Figure 1 and of a control arrangement thereof according to a second kind.

The foregoing aspects, features and advantages of the invention will be apparent from the drawings and the detailed description related thereto.

### DETAILED DESCRIPTION

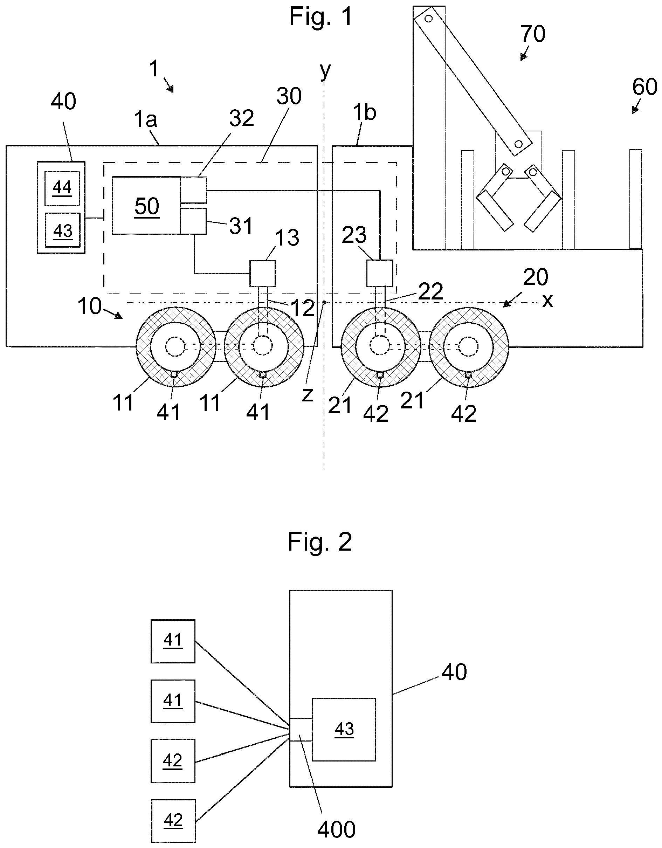

Figure 1 illustrates an embodiment of an all-terrain motor vehicle 1 comprising a machinery 30, and a front driveline 10 and a rear driveline 20. The front driveline 10 comprises rotatable first tyres 11 and a first input shaft 12 connected with the first tyres 11 for transmitting rotation from the machinery 30 to the rotatable first tyres 11. The rear driveline 20 comprises rotatable second tyres 21 and a second input shaft 22 connected with the second tyres 21 for transmitting rotation from the machinery 30 to the rotatable second tyres 21. The machinery 30 is suitable for rotating the first input shaft 12 and the second input shaft 22 with independently adjustable rotation speeds and torques. The all-terrain motor vehicle 1 further comprises a control system 40 for controlling the machinery 30.

Rotating the first input shaft 12 and the second input shaft 22 with independently adjustable rotation speeds and torques is advantageous since hereby rotation of the first tyres 11 of the front driveline 10 can be controlled on the basis of one or more parameters including a parameter indicating the firmness of the grip between the first tyres 11 and the terrain, and rotation of the second tyres 21 of the rear driveline 20 of the all-terrain motor vehicle 1 can be controlled on the basis of one or more parameters including a parameter indicating the firmness of the grip between the second tyres 21 and the terrain. This reduced likelihood of losing traction such that the tyres rub and wear the terrain surface. This also facilitates optimizing distribution of traction between the front driveline and rear driveline.

In the embodiment of Figure 1, for facilitating rotating the first input shaft 12 and the second input shaft 22 with independently adjustable rotation speeds and torques, the machinery 30 comprises a first motor 13 connected with the first input shaft 12 for rotating the first input shaft 12; and a second motor 23 connected with the second input shaft 22 for rotating the second input shaft 22, the control system 40 being configured to control rotation of the first motor 13 and the second motor 23.

The control system 40 is configured to control rotation of the first motor 13 and rotation of the second motor 23, and/or transmit signals to a user via a user interface 44 of the motor vehicle 1, based on magnitude of one or more parameters including a load-dependent parameter of the one or more first tyres 11 and a load-dependent parameter of the one or more second tyres 21. A load-dependent parameter of the one or more first tyres serves well as a parameter indicating the firmness of the grip between the first tyres 11 and the terrain, and a load-dependent parameter of the one or more second tyres 21 serves well as a parameter indicating the firmness of the grip between the second tyres 21 and the terrain. Thus, rotation of tyres 11 of the front driveline 10 can be controlled based on firmness of the grip between the first tyres 11 and the terrain, and rotation of tyres of the rear driveline 20 can be controlled based on firmness of the grip between the second tyres 21 and the terrain. Said transmitting signals to a user via a user interface 44 of the motor vehicle 1 on the other hand makes it possible for the user to take into account in his maneuvering of the vehicle, the individual load states of the front and rear drive line.

The control system 40 is more specifically such that the control system 40 is configured to control rotation of the first motor 13 based on magnitude of one or more parameters, including a load-dependent parameter of the one or more first tyres 11, in particular a parameter magnitude of which depends on magnitude of load suspended by the one or more first tyres 11, and to control rotation of the second motor 23 based on magnitude of one or more parameters, including a load-dependent parameter of the one or more second tyres 21, in particular a parameter magnitude of which depends on magnitude of load suspended by the one or more second tyres 21 and the terrain. Said load-dependent parameter of the one or more first tyres 11 is preferably a force directed on said one or more first tyres 12, and said load-dependent parameter of the one or more second tyres 21 is the magnitude of force directed on said one or more second tyres 21. The force is preferably a force directed on an outer surface of the tyre, preferably in radial direction of the tyre in question. Such forces are directed on tyres by the terrain. A force directed on an outer surface of a tyre is an important factor in traction of the tyre in question, whereby using magnitude of the force directed on an outer surface of a tyre as a basis for control of rotation of the tyre in question is effective and reliable control parameter of an all-terrain vehicle when traction with limited slip is desired.

In the embodiment of Figure 1, the all-terrain motor vehicle 1 is a forestry machine. The motor vehicle comprises a front part 1a comprising said front driveline 10, and rear part 1b comprising said rear driveline 20, which front part 1a and rear part 1b are pivotally connected to each other, preferably pivotally at least around three axis orthogonal to each other, e.g. a vertical axis y and two horizontal axis x, z. The first motor 13 is comprised in the front part 1a and the second motor 23 is comprised in the rear part 1b. In the embodiment of Figure 1, the front part comprises an operating interface 44 operable by the user to control the motor vehicle 1. The operating interface 44 is preferably accessible from a cabin (not showed) comprised in the front part 1a.

In the embodiment of Figure 1, the all-terrain motor vehicle 1, in particular the rear part 1b thereof, comprises a movable handling head 70, which may be a harvester head or a grabbing head. In the embodiment of Figure 1, the all-terrain motor vehicle 1 moreover comprises a receptacle 60 for receiving logs. A harvester head is suitable for cutting a tree into a log and hoisting a log into a pile or into a receptacle 60 comprised in the all-terrain motor vehicle 1. A grabbing head is suitable for hoisting a log from a pile into a receptacle 60 comprised in the all-terrain motor vehicle 1, and preferably also away from the receptacle 60. Either one or both of the receptacle 60 and/or the handling head 70 may be unnecessary, depending on what kind of function combination the all-terrain vehicle 1 is desired to have. For example, when the all-terrain motor vehicle 1 is a harvester, it preferably comprises at least a handling head in the form of a harvester head, and when the all-terrain motor vehicle 1 is a forwarder it preferably comprises at least a receptacle for receiving logs and a handling head in the form of a grabbing head.

The control system 40 comprises an analyzing unit 43 for analyzing signals received from one or more sensing devices 41,42 of the all-terrain motor vehicle 1. The analyzing unit 43 is preferably centralized, but can alternatively be decentralized comprising sub-units for performing tasks of the analyzing unit 43.

In the embodiment of Figure 1, the motor vehicle 1 comprises first sensing devices 41 mounted on the first tyres 11 for sensing forces directed on outer surfaces of said said first tyres, which first sensing devices 41 are connected with the control system 40, in particular with the analyzing unit 43 thereof; and second sensing devices 42 mounted on the second tyres 21 for sensing forces directed on outer surfaces of said second tyres 21, which one or more second sensing devices 42 are connected with the control system 40, in particular with the analyzing unit 43 thereof. Hereby, the control system 40 can obtain sensor signals indicating forces directed on the outer surfaces of said first and second tyres 11,21.

The control system 40, in particular the analyzing unit 43 thereof is configured to determine magnitude of force directed on said first tyres 12 based on signals received from said one or more first sensing devices 41; and the control system 40, in particular the analyzing unit 43 thereof, is configured to determine magnitude of force directed on said second tyres 22 based on signals received from said one or more second sensing devices 42.

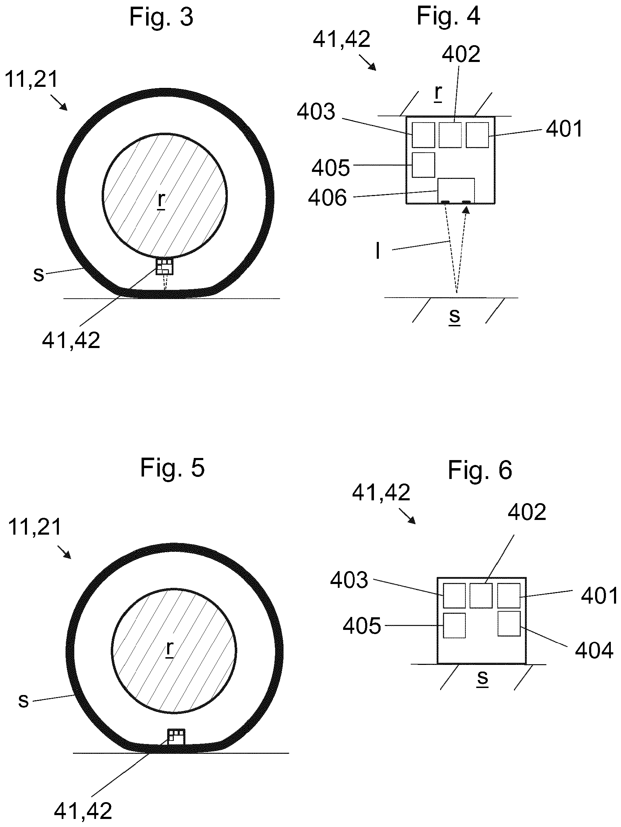

Figure 3 illustrates a preferred positioning of a sensing device 41,42 with regard to the tyre 11,21 on which it is mounted according to a first kind. Figure 4 illustrates a preferred principle of operation and components of the sensing device 41,42 of Figure 3.

Figure 5 illustrates a preferred positioning of a sensing device 41,42 with regard to the tyre 11,21 on which it is mounted according to a second kind. Figure 6 illustrates a preferred principle of operation and components of the sensing device 41,42 of Figure 5.

In the embodiment of Figure 1, each said sensing device 41,42 is arranged to measure one or more parameters of the tyre, including one or more parameters dependent on forces directed on an outer surface of the tyre.

The embodiments of Figures 3 and 5 present sophisticated and accurate ways to determine magnitude of force directed on an outer surface of a tyre 11,21. Preferably, each said sensing device 41,42 is moreover arranged to measure temperature and/or pressure since these may affect the result of calculation of the forces directed on the tyre. Hereby, prevailing temperature and/or pressure inside the tyre in question can be taken into account in determination of the magnitude of force to be determined. For this purpose, each said sensing device 41,42 preferably comprises a temperature sensor 403 and/or a pressure sensor 402as illustrated in Figures 4 and 6.

In the embodiments of Figures 3 and 5, each said sensing device 41,42 is arranged to measure a parameter changing when the tyre deforms under force exerted on its outer surface.

In the embodiment of Figure 3, the aforementioned one or more parameters dependent on forces directed on the tyre include one or more dimensions of the tyre, said dimensions in particularincluding distance between the rim r and the outer shell s of the tyre in question. The measuring is preferably implemented such that each said sensing device 41,42 comprises a distance sensor 406 for measuring distance between the rim r and the outer shell s of the tyre in question. The distance sensor 406 is preferably, as illustrated in Figures 3 and 4, a laser distance sensor comprising an emitter arranged to emit a laser beam 1 and a receiver arranged to receive a reflection thereof. The distance sensor 406 is preferably mounted on the rim r of the tyre 11,21 in question.

In the embodiment of Figure 5, said parameters of the tyre to be measured preferably include acceleration of an acceleration sensor mounted on the shell s of the tyre in question. Accordingly, in this embodiment, each said sensing device 41,42 comprises an acceleration sensor 404 mounted on the shell s. Acceleration of an acceleration sensor mounted on the shell s of the tyre is dependent on forces directed on the outer surface of the tyre. Acceleration sensor thus mounted indicates during rotation of the tyre the route of the acceleration sensor wherefrom the amount of deformation of the tyre under load can be determined, and this is indicative of the force directed by the terrain on the outer surface of the tyre 11,21. Namely, the contact length of the tyre changes in function of force directed on the tyre outer surface, and the route of the acceleration sensor is affected accordingly. Hereby, based on acceleration sensor output, force directed on the outer surface of the tyre 11,21 can be calculated.

As illustrated in Figure 2, the control system 40 comprises a receiver 400. As illustrated in Figures 4 and 5, each said sensing devices 41,42 comprises a transmitter 401 for transmitting wireless signals to the receiver 400 of the control system 40.

Said wireless signals then preferably include measurement data signals of the sensing device 41,42, wherein the measurement signals preferably indicate to the control system a value of a parameter or values of parameters measured by the sensing device 41,42 in question. Preferably, moreover said wireless signals include identification signals identifying the tyre from which the wireless signals are transmitted. It is also preferable that said wireless signals include tyre data signals containing tyre data indicating one or more of: tyre type, tyre material, tyre condition, date of manufacturing of the tyre, date of installation of the tyre. This tyre data may be advantageous since they can be utilized in interpretation on the measurement signal received from the tyre 11,21 in question. The sensing device 41,42 preferably moreover comprises a memory 405, such as a memory chip, on which the tyre data is stored/storable. Alternatively, the tyre data have been stored or uploaded in a memory of the control system or in a cloud, for instance.

The control system 40 is preferably configured to determine a first threshold for torque of the first motor 13 based on magnitude of one or more parameters including the load-dependent parameter of the one or more first tyres 11, the load-dependent parameter preferably being a force directed on said first tyres 11.

The control system 40 is preferably configured to determine a second threshold for the torque of the second motor 23 based on magnitude of one or more parameters including the load-dependent parameter of the one or more second tyres 21, the load-dependent parameter preferably being a force directed on said second tyres 21.

The control system 40 is preferably configured to increase torque of the second motor 23 when the torque of the first motor 13 reaches the first threshold, and vice versa. Hereby, in a case where a threshold determined based on magnitude of a parameter indicating the firmness of the grip between the first tyres 11 and the terrain, is reached, so as not to exceed it, the control system 40 increases the torque of the second motor 23 for rotating the other tyres with increased torque, and vice versa.

Optionally the control system 40 is configured to transmit a signal to the user of the motor vehicle 1 via a user interface 44 when
- the torque of the first motor 13 reaches the first threshold, or
- the torque of the second motor 23 reaches the second threshold or
- the torque of the first motor 13 reaches the first threshold and the torque of the second motor 23 reaches the second threshold.

Said transmitting a signal to a the user then preferably comprises presenting a visual signal in the operating interface, such as lighting a signal light or lighting a visual indicator on a display, or presenting a sound signal, such as an alarm sound.

Optionally the control system 40 is configured to transmit a signal to the user of the motor vehicle 1 via a user interface 44, which signal to a the user then preferably comprises presenting in the operating interface magnitude of the first threshold of the first motor 13, and magnitude of the second threshold of the second motor 23. These magnitudes can then be considered to be recommended maximum torques of the first motor 13 and the second motor 23, for instance.

In these cases, the user can perform himself/herself the actions considered best in view of the signal(s) received from the control system 40. In this case, the control system 40 may or may not be configured to control the torques as described.

Preferably, although not necessarily, the control system 40 is configured to determine a third threshold for speed of the first motor 13 based on magnitude of one or more parameters, including the load-dependent parameter of the one or more first tyres 11.

Preferably, although not necessarily, the control system 40 is configured to determine a fourth threshold for the speed of the second motor 23 based on magnitude of one or more parameters, including the load-dependent parameter of the one or more first tyres 11.

Optionally the control system 40 is configured to transmit a signal to the user of the motor vehicle 1 via a user interface 44 when
- the speed of the first motor 13 reaches the third threshold, or
- the speed of the second motor 23 reaches the fourth threshold or
- the speed of the first motor 13 reaches the third threshold and the speed of the second motor 23 reaches the fourth threshold.
Said transmitting a signal to a the user then preferably comprises presenting a visual signal in the operating interface, such as lighting a signal light or lighting a visual indicator on a display, or presenting a sound signal, such as an alarm sound.

Optionally the control system 40 is configured to transmit a signal to the user of the motor vehicle 1 via a user interface 44, which signal to a the user then preferably comprises presenting in the operating interface magnitude of the third threshold of the first motor 13, and magnitude of the fourth threshold of the second motor 23. These magnitudes can then be considered to be recommended maximum speeds of the first motor 13 and the second motor 23, for instance.

In these cases, the user can perform himself/herself the actions considered best in view of the signal(s) received from the control system 40. In this case, the control system 40 need not be configured to control the speed as described.

The machinery 30 is preferably such that it comprises an engine 50, preferably a combustion engine 50, serving as a common power source of the first motor 13 and the second motor 23.

In the embodiment of Figure 1, the engine 50 is arranged to rotate generators 31,32.

The generators 31,32 are in a first embodiment hydraulic pumps for generating pressure in hydraulic fluid, the first and second motor 13,23 being arranged to be rotated by the pressurized hydraulic fluid.

The generators 31,32 are in a first embodiment generators for generating electricity, the first and second motor 13,23 being arranged to be rotated by the electricity generated by the generators 31,32.

In these cases, the control system 40 is configured to control rotation of the first motor 13 by controlling supply of hydraulic fluid or electricity to the first motor 13, and to control rotation of the second motor 23 by controlling supply of hydraulic fluid or electricity to the second motor 23.

The engine 50 is preferably comprised in one of the front part 1a and the rear part, in the preferred embodiment illustrated in Figure 1 in the front part 1a.

The control arrangement of an all-terrain motor vehicle 1 has already been described in context of description referring to Figures 1-6. The control arrangement comprises at least
a control system 40 for controlling a machinery 30 of an all-terrain motor vehicle 1, the control system 40 preferably comprising an analyzing unit 43;
the control system 40 being configured to control the machinery 30, in particular rotation of a first motor 13, preferably at least torque thereof, and rotation of a second motor 23, preferably at least torque thereof, and/or transmit signals to a user via a user interface 44 of the motor vehicle 1, based on magnitude of one or more parameters including a load-dependent parameter of the one or more first tyres 11 and a load-dependent parameter of the one or more second tyres 21.

Said load-dependent parameter of the one or more first tyres 11 means here a parameter magnitude of which depends on magnitude of load suspended by the one or more first tyres 11. Said load-dependent parameter of the one or more second tyres 21 means here a parameter magnitude of which depends on magnitude of load suspended by the one or more second tyres 21.

The control arrangement comprises one or more first sensing devices 41 for sensing a load-dependent parameter of the one or more first tyres 11 and one or more second sensing devices 42 for sensing a load-dependent parameter of the one or more second tyres 21.

The control system 40, in particular the analyzing unit 43 thereof is configured to determine magnitude of a load-dependent parameter of the one or more first tyres 11 and magnitude of a load-dependent parameter of the one or more second tyres 21 based on signals received from said one or more second sensing devices 42 of the all-terrain motor vehicle 1.

Preferably, said load-dependent parameter of the one or more first tyres 11 is a force directed on said one or more first tyres 12, and said load-dependent parameter of the one or more second tyres 21 is force directed on said one or more second tyres 21.

More specifically, it is preferable that the control arrangement comprises one or more first sensing devices 41 mounted or mountable on one or more of first tyres 11 for sensing a force directed on an outer surface of the tyre, preferably at least in radial direction of the tyre 11, which one or more first sensing devices 41 are connected or connectable, e.g. by one or more buses for signal transmission, with the control system 40, in particular with the analyzing unit 43; and one or more second sensing devices 42 mounted or mountable on one or more of second tyres 21 for sensing a force directed on an outer surface of the tyre 21, preferably at least in radial direction of the tyre, which one or more second sensing devices 42 are connected or connectable, e.g. by one or more buses for signal transmission, with the control system 40, in particular with the analyzing unit 43.

More specifically, it is preferable that the control system 40, in particular the analyzing unit 43 thereof is configured to determine magnitude of force directed on an outer surface of said one or more first tyres 12 based on signals received from said one or more first sensing devices; and the control system 40, in particular the analyzing unit 43 thereof, being configured to determine magnitude of force directed on an outer surface of said one or more second tyres 22 based on signals received from said one or more second sensing devices 42.

Preferably, the all-terrain motor vehicle is particularly a forestry machine, such as a harvester or forwarder, for instance. This is because in such devices the advantages of the invention are substantial due to one or more of: improved gentleness of its impact on the forest terrain and increased transport capacity due to improved traction. However, the all-terrain motor vehicle could alternatively have some other purpose for traveling in an uneven terrain since one or more of the advantages of the invention could also be obtained at least partially when implemented in other types of all-terrain motor vehicles.

Generally, the magnitude of a load-dependent parameter used as basis for control of rotation of the first motor 13 and rotation of the second motor 23 and/or transmit signals to a user via a user interface of the motor vehicle 1 can be a magnitude of a load-dependent parameter of any single tyre (of the driveline in question) or a magnitude of plurality of tyres (of the driveline in question), in which case it can be an average of magnitudes of a load-dependent parameter of said plurality of tyres (of the driveline in question), or a sum of magnitudes of a load-dependent parameter of said plurality of tyres. When needed, the control system can be configured to calculate said average or said sum, or to select a single tyres or a subset of tyres, the magnitude of a load-dependent parameter of which is to be used as basis for the control and/or transmission of a signal.

Generally, the load dependent parameter being a force directed on an outer surface of one or more first/second tyres is advantageous due to its advantages related to reliability and direct data from the relevant component of the vehicle for traction.

Generally, when in the application it is stated an event or act is performed or occurs based on something, it is meant that something is based solely based on said something or based at least on said something.

Generally, although dimension(s) and/or acceleration have been mentioned as preferred alternative parameters of the tyre to be measured in sensing a force directed on an outer surface of a tyre, this is not necessary since there are also further alternative ways to sense a force directed on an outer surface of a tyre, such as using force sensors, such as one or more strain sensors for instance embedded in and/or placed against a tyre structure (e.g. shell s or rim r).

Generally, the one or more first tyres can be connected with alternative ways to each other in a locked manner or with a differential. Preferably, the all terrain vehicle uses bogie type axles in the front driveline. Correspondingly, the one or more second tyres can be connected with alternative ways to each other, such as in a locked manner or with a differential. Preferably, the all terrain vehicle uses bogie type axles in the rear driveline.

As mentioned, the embodiments of Figures 3 and 5 present sophisticated and accurate ways to determine magnitude of force directed on an outer surface of a tyre 11,21. It may be possible to determine magnitude of force directed on a tyre 11,21 in many alternative ways. In another kind of option, said one or more parameters of the tyre dependent on forces directed on the outer surface of the tyre can include pressure inside the tyre in question. Serving this purpose, each said sensing device 41,42 comprises a pressure sensor 402, as illustrated in Figures 4 and 6.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied. It is therefore to be understood that the invention and its embodiments are not limited to the examples described above but may vary within the scope of the claims.

## Claims

1. An all-terrain motor vehicle (1), which is a forestry machine and comprises
a front driveline (10) comprising one or more rotatable first tyres (11) and a first input shaft (12) connected with the one or more first tyres (11) for transmitting rotation from a machinery (30) to the one or more rotatable first tyres (11);
a rear driveline (20) comprising one or more rotatable second tyres (21) and a second input shaft (22) connected with the one or more second tyres (21) for transmitting rotation from a machinery (30) to the one or more rotatable second tyres (21);
a machinery (30) for rotating the first input shaft (12) and the second input shaft (22) with independently adjustable rotation speeds and torques;
a control system (40) for controlling the machinery (30),
wherein the machinery (30) comprises a first motor (13) for rotating the first input shaft (12); and a second motor (23) for rotating the second input shaft (22), the control system (40) being configured to control rotation of the first motor (13) and the second motor (23);
**characterized in that** the control system (40) is configured to control rotation of the first motor (13) and rotation of the second motor (23) and/or transmit signals to a user via a user interface of the motor vehicle (1), based on magnitude of one or more parameters including a load-dependent parameter of the one or more first tyres (11) and a load-dependent parameter of the one or more second tyres (21); and
wherein said load-dependent parameter of the one or more first tyres (11) is a force directed on an outer surface of said one or more first tyres (12), and said load-dependent parameter of the one or more second tyres (21) is a force directed on an outer surface of said one or more second tyres (21); and
wherein the motor vehicle (1) comprises
one or more first sensing devices (41) mounted on one or more of the first tyres (11) for sensing a force directed on an outer surface of the tyre, preferably at least in radial direction of the tyre, which one or more first sensing devices (41) are connected with the control system (40), preferably with an analyzing unit (43) thereof; and
one or more second sensing devices (42) mounted on one or more of the second tyres (21) for sensing a force directed on an outer surface of the tyre (21), preferably at least in radial direction of the tyre (21), which one or more second sensing devices (42) are connected with the control system (40), preferably with an analyzing unit (43) thereof.

2. A motor vehicle according to any of the preceding claims, wherein the motor vehicle is a harvester or a forwarder.

3. A motor vehicle (1) according to any of the preceding claims, wherein the control system (40) is configured to control rotation of the first input shaft (12), based on magnitude of one or more parameters, including a load-dependent parameter of the one or more first tyres (11), in particular a parameter magnitude of which depends on magnitude of load suspended by the one or more first tyres (11), and to control rotation of the second input shaft (22), based on magnitude of one or more parameters, including a load-dependent parameter of the one or more second tyres (21), in particular a parameter magnitude of which depends on magnitude of load suspended by the one or more second tyres (21).

4. A motor vehicle (1) according to any of the preceding claims, wherein the motor vehicle (1) comprises one or more first sensing devices (41) for sensing a load-dependent parameter of the one or more first tyres (11) and one or more second sensing devices (42) for sensing a load-dependent parameter of the one or more second tyres (21).

5. A motor vehicle (1) according to any of the preceding claims, wherein the control system (40), preferably an analyzing unit (43) thereof is configured to determine magnitude of a load-dependent parameter of the one or more first tyres (11) based on signals received from said one or more first sensing devices (41) of the all-terrain motor vehicle (1) and magnitude of a load-dependent parameter of the one or more second tyres (21) based on signals received from said one or more second sensing devices (42) of the all-terrain motor vehicle (1).

6. A motor vehicle (1) according to any of the preceding claims, wherein the control system (40), preferably an analyzing unit (43) thereof, is configured to determine magnitude of force directed on an outer surface of said one or more first tyres (12) based on signals received from said one or more first sensing devices, and magnitude of force directed on an outer surface of said one or more second tyres (22) based on signals received from said one or more second sensing devices (42).

7. A motor vehicle according to any of the preceding claims, wherein the motor vehicle comprises a front part (1a) comprising said front driveline (10), and rear part (1b) comprising said rear driveline (20), which front part (1a) and rear part (1b) are pivotally connected, preferably pivotally at least around three axis orthogonal to each other, e.g. a vertical axis y and two horizontal axis (x, z).

8. A control arrangement of an all-terrain motor vehicle (1), comprising
a control system (40) for controlling a machinery (30) of an all-terrain motor vehicle (1), preferably comprising an analyzing unit (43);
**characterized in that** the control system (40) is configured to control the machinery (30), in particular rotation of a first motor (13), preferably at least torque thereof, and rotation of a second motor (23), preferably at least torque thereof, and/or transmit signals to a user via a user interface (44) of the motor vehicle (1), based on magnitude of one or more parameters including a load-dependent parameter of one or more first tyres (11) and a load-dependent parameter of one or more second tyres (21);
wherein said load-dependent parameter of the one or more first tyres (11) is a force directed on an outer surface of said one or more first tyres (12), and said load-dependent parameter of the one or more second tyres (21) is a force directed on an outer surface of said one or more second tyres (21); and
wherein the control arrangement comprises
one or more first sensing devices (41) mounted or mountable on one or more of first tyres (11) for sensing a force directed on an outer surface of the first tyre, preferably at least in radial direction of the tyre, which one or more first sensing devices (41) are connected or connectable, e.g. by one or more buses for signal transmission, with the control system (40), in particular with an analyzing unit (43) thereof; and
one or more second sensing devices (42) mounted or mountable on one or more of second tyres (21) for sensing a force directed on an outer surface of the second tyre at least in radial direction of the tyre, which one or more second sensing devices (42) are connected or connectable, e.g. by one or more buses for signal transmission, with the control system (40), in particular with an analyzing unit (43) thereof.

9. A control arrangement according claim 8, wherein the control arrangement comprises one or more first sensing devices (41) for sensing a load-dependent parameter of the one or more first tyres (11) and one or more second sensing devices (42) for sensing a load-dependent parameter of the one or more second tyres (21).

10. A control arrangement according to any of the preceding claims 8-9, wherein the control system (40), preferably an analyzing unit (43) thereof is configured to determine magnitude of a load-dependent parameter of the one or more first tyres (11) based on signals received from said one or more first sensing devices (41) and magnitude of a load-dependent parameter of the one or more second tyres (21) based on signals received from said one or more second sensing devices (42).

11. A control arrangement or an all-terrain motor vehicle (1) according to any of the preceding claims, wherein each said sensing device (41,42) is arranged to measure one or more parameters of the tyre, preferably including one or more parameters dependent on forces directed on the tyre, said one or more parameters dependent on forces directed on the tyre preferably including at least pressure inside the tyre in question.

12. A control arrangement or an all-terrain motor vehicle (1) according to any of the preceding claims, wherein the control system (40) comprises a receiver (400), and each said sensing device (41,42) comprises a transmitter (401) for transmitting wireless signals to the receiver (400) of the control system (40).

13. A control arrangement or an all-terrain motor vehicle (1) according to any of the preceding claims, wherein the control system (40) is configured to determine a first threshold for torque of the first motor (13) based on magnitude of one or more parameters including the load-dependent parameter of the one or more first tyres (11) and the control system (40) is configured to determine a second threshold for the torque of the second motor (23) based magnitude of on one or more parameters including the load-dependent parameter of the one or more second tyres (21).

14. A control arrangement or an all-terrain motor vehicle (1) according to any of the preceding claims, wherein the control system (40) is configured to increase torque of the second motor (23) when the torque of the first motor (13) reaches the first threshold, and vice versa.

15. A control arrangement or an all-terrain motor vehicle (1) according to any of the preceding claims, wherein the control system (40) is configured to transmit a signal to the user of the motor vehicle via a user interface (44) when
- the torque of the first motor (13) reaches the first threshold, or
- the torque of the second motor (23) reaches the second threshold or
- the torque of the first motor (13) reaches the first threshold and the torque of the second motor (23) reaches the second threshold.

## Patentansprüche

1. Geländekraftfahrzeug (1), bei dem es sich um eine Forstmaschine handelt und das Folgendes umfasst
einen vorderen Antriebsstrang (10), der eine oder mehrere drehbare erste Reifen (11) und eine erste Eingangswelle (12), die mit dem einen oder den mehreren ersten Reifen (11) verbunden ist, zum Übertragen einer Drehung von einer Maschine (30) auf den einen oder die mehreren drehbaren ersten Reifen (11) umfasst;
einen hinteren Antriebsstrang (20), der eine oder mehrere drehbare zweite Reifen (21) und eine zweite Eingangswelle (22), die mit dem einen oder den mehreren zweiten Reifen (21) verbunden ist, zum Übertragen einer Drehung von einer Maschine (30) auf den einen oder die mehreren drehbaren zweiten Reifen (21) umfasst;
eine Maschine (30) zum Drehen der ersten Eingangswelle (12) und der zweiten Eingangswelle (22) mit unabhängig einstellbaren Drehzahlen und Drehmomenten;
ein Steuersystem (40) zum Steuern der Maschine (30),
wobei die Maschine (30) einen ersten Motor (13) zum Drehen der ersten Eingangswelle (12) und einen zweiten Motor (23) zum Drehen der zweiten Eingangswelle (22) umfasst, wobei das Steuersystem (40) dazu ausgelegt ist, eine Drehung des ersten Motors (13) und des zweiten Motors (23) zu steuern;
**dadurch gekennzeichnet, dass** das Steuersystem (40) dazu ausgelegt ist, eine Drehung des ersten Motors (13) und eine Drehung des zweiten Motors (23) zu steuern und/oder auf Basis einer Größe von einem oder mehreren Parametern, die einen lastabhängigen Parameter des einen oder der mehreren ersten Reifen (11) und einen lastabhängigen Parameter des einen oder der mehreren zweiten Reifen (21) beinhalten, Signale via eine Benutzerschnittstelle des Kraftfahrzeugs (1) zu einem Benutzer zu übertragen; und
wobei der lastabhängige Parameter des einen oder der mehreren ersten Reifen (11) eine auf eine Außenfläche des einen oder der mehreren ersten Reifen (12) gerichtete Kraft ist und der lastabhängige Parameter des einen oder der mehreren zweiten Reifen (21) eine auf eine Außenfläche des einen oder der mehreren zweiten Reifen (21) gerichtete Kraft ist und
wobei das Kraftfahrzeug (1) Folgendes umfasst
eine oder mehrere erste Erfassungsvorrichtungen (41), die an einem oder mehreren der ersten Reifen (11) montiert sind, zum Erfassen einer auf eine Außenfläche des Reifens gerichteten Kraft, vorzugsweise mindestens in eine Radialrichtung des Reifens, wobei die eine oder die mehreren ersten Erfassungsvorrichtungen (41) mit dem Steuersystem (40) verbunden sind, vorzugsweise mit einer Analyseeinheit (43) davon; und
eine oder mehrere zweite Erfassungsvorrichtungen (42) die an einem oder mehreren der zweiten Reifen (21) montiert sind, zum Erfassen einer auf eine Außenfläche des Reifens (21) gerichteten Kraft, vorzugsweise mindestens in eine Radialrichtung des Reifens (21), wobei die eine oder die mehreren zweiten Erfassungsvorrichtungen (42) mit dem Steuersystem (40) verbunden sind, vorzugsweise mit einer Analyseeinheit (43) davon.

2. Kraftfahrzeug nach einem der vorhergehenden Ansprüche, wobei das Kraftfahrzeug eine Erntemaschine oder ein Verlader ist.

3. Kraftfahrzeug (1) nach einem der vorhergehenden Ansprüche, wobei das Steuersystem (40) dazu ausgelegt ist, eine Drehung der ersten Eingangswelle (12) auf Basis einer Größe von einem oder mehreren Parametern zu steuern, die einen lastabhängigen Parameter des einen oder der mehreren ersten Reifen (11) beinhalten, wobei eine Parametergröße davon insbesondere von einer Größe einer Last abhängig ist, die von dem einen oder den mehreren ersten Reifen (11) gehalten wird, und eine Drehung der zweiten Eingangswelle (22) auf Basis einer Größe von einem oder mehreren Parametern zu steuern, die einen lastabhängigen Parameter des einen oder der mehreren zweiten Reifen (21) beinhalten, wobei eine Parametergröße davon insbesondere von einer Größe einer Last abhängig ist, die von dem einen oder den mehreren zweiten Reifen (21) gehalten wird.

4. Kraftfahrzeug (1) nach einem der vorhergehenden Ansprüche, wobei das Kraftfahrzeug (1) eine oder mehrere erste Erfassungsvorrichtungen (41) zum Erfassen eines lastabhängigen Parameters des einen oder der mehreren ersten Reifen (11) und eine oder mehrere zweite Erfassungsvorrichtungen (42) zum Erfassen eines lastabhängigen Parameters des einen oder der mehreren zweiten Reifen (21) umfasst.

5. Kraftfahrzeug (1) nach einem der vorhergehenden Ansprüche, wobei das Steuersystem (40), vorzugsweise eine Analyseeinheit (43) davon, dazu ausgelegt ist, eine Größe eines lastabhängigen Parameters des einen oder der mehreren ersten Reifen (11) auf Basis von Signalen, die von der einen oder den mehreren ersten Erfassungsvorrichtungen (41) des Geländekraftfahrzeugs (1) empfangen werden, und eine Größe eines lastabhängigen Parameters des einen oder der mehreren zweiten Reifen (21) auf Basis von Signalen, die von der einen oder den mehreren zweiten Erfassungsvorrichtungen (42) des Geländekraftfahrzeugs (1) empfangen werden, zu bestimmen.

6. Kraftfahrzeug (1) nach einem der vorhergehenden Ansprüche, wobei das Steuersystem (40), vorzugsweise eine Analyseeinheit (43) davon, dazu ausgelegt ist, eine Größe einer auf eine Außenfläche des einen oder der mehreren ersten Reifen (12) gerichteten Kraft auf Basis von Signalen, die von der einen oder den mehreren ersten Erfassungsvorrichtungen empfangen werden, und eine Größe einer auf eine Außenfläche des einen oder der mehreren zweiten Reifen (22) gerichteten Kraft auf Basis von Signalen, die von der einen oder den mehreren zweiten Erfassungsvorrichtungen (42) empfangen werden, zu bestimmen.

7. Kraftfahrzeug nach einem der vorhergehenden Ansprüche, wobei das Kraftfahrzeug einen vorderen Teil (1a), der einen vorderen Antriebsstrang (10) umfasst, sowie einen hinteren Teil (1b) umfasst, der einen hinteren Antriebsstrang (20) umfasst, wobei der vordere Teil (1a) und der hintere Teil (1b) schwenkbar verbunden sind, vorzugsweise mindestens um drei zueinander orthogonalen Achsen schwenkbar, beispielsweise eine vertikale Achse y und zwei horizontale Achsen (x, z).

8. Steueranordnung eines Geländekraftfahrzeugs (1), die Folgendes umfasst
ein Steuersystem (40) zum Steuern einer Maschine (30) eines Geländekraftfahrzeugs (1), das vorzugsweise eine Analyseeinheit (43) umfasst;
**dadurch gekennzeichnet, dass** das Steuersystem (40) dazu ausgelegt ist, die Maschine (30), insbesondere eine Drehung eines ersten Motors (13), vorzugsweise mindestens eines Drehmoments davon, und eine Drehung eines zweiten Motors (23), vorzugsweise mindestens eines Drehmoments davon zu steuern und/oder auf Basis einer Größe von einem oder mehreren Parametern, die einen lastabhängigen Parameter von einem oder mehreren ersten Reifen (11) und einen lastabhängigen Parameter von einem oder mehreren zweiten Reifen (21) beinhalten, Signale via eine Benutzerschnittstelle (44) des Kraftfahrzeugs (1) zu einem Benutzer zu übertragen;
wobei der lastabhängige Parameter des einen oder der mehreren ersten Reifen (11) eine auf eine Außenfläche des einen oder der mehreren ersten Reifen (12) gerichtete Kraft ist und der lastabhängige Parameter des einen oder der mehreren zweiten Reifen (21) eine auf eine Außenfläche des einen oder der mehreren zweiten Reifen (21) gerichtete Kraft ist und
wobei die Steueranordnung Folgendes umfasst
eine oder mehrere erste Erfassungsvorrichtungen (41), die an einem oder mehreren von ersten Reifen (11) montiert oder montierbar sind, zum Erfassen einer auf eine Außenfläche des ersten Reifens gerichteten Kraft, vorzugsweise mindestens in eine Radialrichtung des Reifens, wobei die eine oder die mehreren ersten Erfassungsvorrichtungen (41) mit dem Steuersystem (40) verbunden oder vebindbar sind, beispielsweise durch einen oder mehrere Busse für die Signalübertragung, insbesondere mit einer Analyseeinheit (43) davon; und
eine oder mehrere zweite Erfassungsvorrichtungen (42), die an einem oder mehreren von zweiten Reifen (21) montiert oder montierbar sind, zum Erfassen einer auf eine Außenfläche des zweiten Reifens gerichteten Kraft, mindestens in eine Radialrichtung des Reifens, wobei die eine oder die mehreren zweiten Erfassungsvorrichtungen (42) mit dem Steuersystem (40) verbunden oder vebindbar sind, beispielsweise durch einen oder mehrere Busse für die Signalübertragung, insbesondere mit einer Analyseeinheit (43) davon.

9. Steueranordnung nach Anspruch 8, wobei die Steueranordnung eine oder mehrere erste Erfassungsvorrichtungen (41) zum Erfassen eines lastabhängigen Parameters des einen oder der mehreren ersten Reifen (11) und eine oder mehrere zweite Erfassungsvorrichtungen (42) zum Erfassen eines lastabhängigen Parameters des einen oder der mehreren zweiten Reifen (21) umfasst.

10. Steueranordnung nach einem der vorhergehenden Ansprüche 8-9, wobei das Steuersystem (40), vorzugsweise eine Analyseeinheit (43) davon, dazu ausgelegt ist, eine Größe eines lastabhängigen Parameters des einen oder der mehreren ersten Reifen (11) auf Basis von Signalen, die von der einen oder den mehreren ersten Erfassungsvorrichtungen (41) empfangen werden, und eine Größe eines lastabhängigen Parameters des einen oder der mehreren zweiten Reifen (21) auf Basis von Signalen, die von der einen oder den mehreren zweiten Erfassungsvorrichtungen (42) empfangen werden, zu bestimmen.

11. Steueranordnung oder Geländekraftfahrzeug (1) nach einem der vorhergehenden Ansprüche, wobei jede Erfassungsvorrichtung (41,42) angeordnet ist, einen oder mehrere Parameter des Reifens zu messen, die vorzugsweise einen oder mehrere Parameter beinhalten, die von auf den Reifen gerichteten Kräften abhängig sind, wobei der eine oder die mehreren Parameter, die von auf den Reifen gerichteten Kräften abhängig sind, vorzugsweise mindestens einen Druck im betreffenden Reifen beinhalten.

12. Steueranordnung oder Geländekraftfahrzeug (1) nach einem der vorhergehenden Ansprüche, wobei das Steuersystem (40) einen Empfänger (400) umfasst und jede Erfassungsvorrichtung (41,42) zum Senden von drahtlosen Signalen an den Empfänger (400) des Steuersystems (40) einen Sender (401) umfasst.

13. Steueranordnung oder Geländekraftfahrzeug (1) nach einem der vorhergehenden Ansprüche, wobei das Steuersystem (40) dazu ausgelegt ist, auf Basis einer Größe von einem oder mehreren Parametern, die den lastabhängigen Parameter des einen oder der mehreren ersten Reifen (11) beinhalten, einen ersten Schwellwert für ein Drehmoment des ersten Motors (13) zu bestimmen, und das Steuersystem (40) dazu ausgelegt ist, auf Basis einer Größe von einem oder mehreren Parametern, die den lastabhängigen Parameter des einen oder der mehreren zweiten Reifen (21) beinhalten, einen zweiten Schwellwert für das Drehmoment des zweiten Motors (23) zu bestimmen.

14. Steueranordnung oder Geländekraftfahrzeug (1) nach einem der vorhergehenden Ansprüche, wobei das Steuersystem (40) dazu ausgelegt ist, das Drehmoment des zweiten Motors (23) zu erhöhen, wenn das Drehmoment des ersten Motors (13) den ersten Schwellwert erreicht, und umgekehrt.

15. Steueranordnung oder Geländekraftfahrzeug (1) nach einem der vorhergehenden Ansprüche, wobei das Steuersystem (40) dazu ausgelegt ist, ein Signal via eine Benutzerschnittstelle (44) an den Benutzer des Kraftfahrzeugs zu übertragen, wenn
- das Drehmoment des ersten Motors (13) den ersten Schwellwert erreicht oder
- das Drehmoment des zweiten Motors (23) den zweiten Schwellwert erreicht oder
- das Drehmoment des ersten Motors (13) den ersten Schwellwert erreicht und das Drehmoment des zweiten Motors (23) den zweiten Schwellwert erreicht.

## Revendications

1. Véhicule tout-terrain à moteur (1) qui est une machine forestière et comprend :
une transmission avant (10) comprenant un ou plusieurs premiers pneus rotatifs (11) et un premier arbre d'entrée (12) raccordé aux un ou plusieurs premiers pneus (11) pour transmettre la rotation d'une machine auxiliaire (30) aux un ou plusieurs premiers pneus rotatifs (11);
une transmission arrière (20) comprend un ou plusieurs seconds pneus rotatifs (21) et un second arbre d'entrée (22) raccordé aux un ou plusieurs seconds pneus (21) pour transmettre la rotation d'une machine auxiliaire (30) aux un ou plusieurs seconds pneus rotatifs (21);
une machine auxiliaire (30) pour faire tourner le premier arbre d'entrée (12) et le second arbre d'entrée (22) avec des vitesses et des couples de rotation indépendamment ajustables;
un système de commande (40) pour commander la machine auxiliaire (30),
dans lequel la machine auxiliaire (30) comprend un premier moteur (13) pour faire tourner le premier arbre d'entrée (12); et un second moteur (23) pour faire tourner le second arbre d'entrée (22), le système de commande (40) étant configuré pour commander la rotation du premier moteur (13) et du second moteur (23) ;
**caractérisé en ce que** le système de commande (40) est configuré pour commander la rotation du premier moteur (13) et la rotation du second moteur (23) et/ou transmettre des signaux à un utilisateur via une interface utilisateur du véhicule à moteur (1), sur la base de la grandeur des un ou plusieurs paramètres comprenant un paramètre dépendant de la charge des un ou plusieurs premiers pneus (11) et un paramètre dépendant de la charge des un ou plusieurs seconds pneus (21); et
dans lequel ledit paramètre dépendant de la charge des un ou plusieurs premiers pneus (11) est une force dirigée sur une surface externe desdits un ou plusieurs premiers pneus (12), et ledit paramètre dépendant de la charge des un ou plusieurs seconds pneus (21) est une force dirigée sur une surface externe desdits un ou plusieurs seconds pneus (21); et
dans lequel le véhicule à moteur (1) comprend :
un ou plusieurs dispositifs de détection (41) montés sur un ou plusieurs des premiers pneus (11) pour détecter une force dirigée sur une surface externe du pneu, de préférence au moins dans la direction radiale du pneu, lesquels un ou plusieurs premiers dispositifs de détection (41) sont raccordés au système de commande (40), de préférence à son unité d'analyse (43); et
un ou plusieurs seconds dispositifs de détection (42) montés sur un ou plusieurs des seconds pneus (21) pour détecter une force dirigée sur une surface externe du pneu (21), de préférence au moins dans la direction radiale du pneu (21), lesquels un ou plusieurs seconds dispositifs de détection (42) sont raccordés au système de commande (40), de préférence avec son unité d'analyse (43) .

2. Véhicule à moteur selon l'une quelconque des revendications précédentes, dans lequel le véhicule à moteur est une moissonneuse ou un porteur forestier.

3. Véhicule à moteur (1) selon l'une quelconque des revendications précédentes, dans lequel le système de commande (40) est configuré pour commander la rotation du premier arbre d'entrée (12), sur la base de la grandeur des un ou plusieurs paramètres, comprenant un paramètre dépendant de la charge des un ou plusieurs premiers pneus (11), en particulier dont une grandeur de paramètre dépend de la grandeur de charge suspendue par les un ou plusieurs premiers pneus (11) et pour commander la rotation du second arbre d'entrée (22), sur la base de la grandeur des un ou plusieurs paramètres, comprenant un paramètre dépendant de la charge des un ou plusieurs seconds pneus (21), en particulier dont la grandeur de paramètre dépend de la grandeur de charge suspendue par les un ou plusieurs seconds pneus (21).

4. Véhicule à moteur (1) selon l'une quelconque des revendications précédentes, dans lequel le véhicule à moteur (1) comprend un ou plusieurs premiers dispositifs de détection (41) pour détecter un paramètre dépendant de la charge des un ou plusieurs premiers pneus (11) et un ou plusieurs seconds dispositifs de détection (42) pour détecter un paramètre dépendant de la charge des un ou plusieurs seconds pneus (21).

5. Véhicule à moteur (1) selon l'une quelconque des revendications précédentes, dans lequel le système de commande (40), de préférence son unité d'analyse (43), est configuré pour déterminer la grandeur d'un paramètre dépendant de la charge des un ou plusieurs premiers pneus (11) sur la base des signaux reçus desdits un ou plusieurs dispositifs de détection (41) du véhicule tout-terrain à moteur (1) et la grandeur d'un paramètre dépendant de la charge des un ou plusieurs seconds pneus (21) sur la base des signaux reçus desdits un ou plusieurs seconds dispositifs de détection (42) du véhicule tout-terrain à moteur (1) .

6. Véhicule à moteur (1) selon l'une quelconque des revendications précédentes, dans lequel le système de commande (40), de préférence son unité d'analyse (43), est configuré pour déterminer la grandeur de force dirigée sur une surface externe desdits un ou plusieurs premiers pneus (12) sur la base des signaux reçus desdits un ou plusieurs premiers dispositifs de détection, et la grandeur de force dirigée sur une surface externe desdits un ou plusieurs seconds pneus (22) sur la base des signaux reçus desdits un ou plusieurs seconds dispositifs de détection (42).

7. Véhicule à moteur selon l'une quelconque des revendications précédentes, dans lequel le véhicule à moteur comprend une partie avant (1a) comprenant ladite transmission avant (10), et la partie arrière (1b) comprenant ladite transmission arrière (20), laquelle partie avant (1a) et la partie arrière (1b) sont raccordées, de manière pivotante, de préférence de manière pivotante au moins autour de trois axes orthogonaux entre eux, par exemple un axe vertical y et deux axes horizontaux (x, z).

8. Agencement de commande d'un véhicule tout-terrain à moteur (1) comprenant :
un système de commande (40) pour commander une machine auxiliaire (30) d'un véhicule tout-terrain à moteur (1), comprenant de préférence une unité d'analyse (43);
**caractérisé en ce que** le système de commande (40) est configuré pour commander la machine auxiliaire (30), en particulier la rotation d'un premier moteur (13), de préférence au moins son couple, et la rotation d'un second moteur (23), de préférence au moins son couple, et/ou transmettre des signaux à un utilisateur via une interface utilisateur (44) du véhicule à moteur (1), sur la base de la grandeur d'un ou de plusieurs paramètres comprenant un paramètre dépendant de la charge des un ou plusieurs premiers pneus (11) et un paramètre dépendant de la charge des un ou plusieurs seconds pneus (21);
dans lequel ledit paramètre dépendant de la charge des un ou plusieurs premiers pneus (11) est une force dirigée sur une surface externe desdits un ou plusieurs premiers pneus (12), et ledit paramètre dépendant de la charge des un ou plusieurs seconds pneus (21) est une force dirigée sur une surface externe desdits un ou plusieurs seconds pneus (21); et
dans lequel l'agencement de commande comprend :
un ou plusieurs premiers dispositifs de détection (41) montés ou pouvant être montés sur un ou plusieurs des premiers pneus (11) pour détecter une force dirigée sur une surface externe du premier pneu, de préférence au moins dans la direction radiale du pneu, lesquels un ou plusieurs premiers dispositifs de détection (41) sont raccordés ou peuvent être raccordés, par exemple par une ou plusieurs barres omnibus pour la transmission de signaux, au système de commande (40), en particulier à son unité d'analyse (43); et
un ou plusieurs seconds dispositifs de détection (42) montés ou pouvant être montés sur un ou plusieurs des seconds pneus (21) pour détecter une force dirigée sur une surface externe du second pneu au moins dans la direction radiale du pneu, lesdits un ou plusieurs seconds dispositifs de détection (42) sont raccordés ou peuvent être raccordés, par exemple par une ou plusieurs barres omnibus pour la transmission de signaux, au système de commande (40), en particulier à son unité d'analyse (43) .

9. Agencement de commande selon la revendication 8, dans lequel l'agencement de commande comprend un ou plusieurs premiers dispositifs de détection (41) pour détecter un paramètre dépendant de la charge des un ou plusieurs premiers pneus (11) et un ou plusieurs seconds dispositifs de détection (42) pour détecter un paramètre dépendant de la charge des un ou plusieurs seconds pneus (21).

10. Agencement de commande selon l'une quelconque des revendications 8 à 9, dans lequel le système de commande (40), de préférence son unité d'analyse (43), est configuré pour déterminer la grandeur d'un paramètre dépendant de la charge des un ou plusieurs premiers pneus (11) sur la base des signaux reçus desdits un ou plusieurs premiers dispositifs de détection (41) et la grandeur d'un paramètre dépendant de la charge des un ou plusieurs seconds pneus (21) sur la base des signaux reçus desdits un ou plusieurs seconds dispositifs de détection (42).

11. Agencement de commande ou véhicule tout-terrain à moteur (1) selon l'une quelconque des revendications précédentes, dans lequel chacun desdits dispositifs de détection (41, 42) est agencé pour mesurer un ou plusieurs paramètres du pneu, de préférence comprenant un ou plusieurs paramètres dépendant des forces dirigées sur le pneu, lesdits un ou plusieurs paramètres dépendant des forces dirigées sur le pneu comprenant de préférence au moins la pression à l'intérieur du pneu en question.

12. Agencement de commande ou véhicule tout-terrain à moteur (1) selon l'une quelconque des revendications précédentes, dans lequel le système de commande (40) comprend un récepteur (400), et chacun desdits dispositifs de détection (41, 42) comprend un transmetteur (401) pour transmettre des signaux sans fil au récepteur (400) du système de commande (40).

13. Agencement de commande ou véhicule tout-terrain à moteur (1) selon l'une quelconque des revendications précédentes, dans lequel le système de commande (40) est configuré pour déterminer un premier seuil pour le couple du premier moteur (13) sur la base de la grandeur d'un ou de plusieurs paramètres comprenant le paramètre dépendant de la charge des un ou plusieurs premiers pneus (11) et le système de commande (40) est configuré pour déterminer un second seuil pour le couple du second moteur (23) sur la base de la grandeur d'un ou de plusieurs paramètres comprenant le paramètre dépendant de la charge des un ou plusieurs seconds pneus (21).

14. Agencement de commande ou véhicule tout-terrain à moteur (1) selon l'une quelconque des revendications précédentes, dans lequel le système de commande (40) est configuré pour augmenter le couple du second moteur (23) lorsque le couple du premier moteur (13) atteint le premier seuil, et vice versa.

15. Agencement de commande ou véhicule tout-terrain à moteur (1) selon l'une quelconque des revendications précédentes, dans lequel le système de commande (40) est configuré pour transmettre un signal à l'utilisateur du véhicule à moteur via une interface utilisateur (44) lorsque :
le couple du premier moteur (13) atteint le premier seuil, ou
le couple du second moteur (23) atteint le second seuil, ou
le couple du premier moteur (13) atteint le premier seuil et le couple du second moteur (23) atteint le second seuil.
